# EUROPEAN PATENT APPLICATION

(11) **EP 2 592 712 A1**
(43) Date of publication of application: **15.05.2013**
(21) Application number: 11188964.8
(22) Date of filing: 14.11.2011
(51) Int. Cl.: H02J 7/00

(54) **Circuit and method for charging at least two serially connected capacitors**

(71) Applicant: Schneider Electric Buildings LLC, North Andover, MA 02845 (US)
(72) Inventor: Karlsson, Mats, 216 24 Malmö (SE); Nilsson, Per, 247 35 Södra Sandby (SE)
(74) Representative: Eriksson, Bengt Tomas

(57) **Abstract**

There is provided a circuit and method for charging at least two serially connected capacitors. In the circuit, each capacitor has a corresponding rectifying element and a corresponding winding portion. The winding portions are wound on a common core and have the same number of turns. A first end of each winding portion is connected to a first terminal of its corresponding capacitor, and a second end of each winding portion is connected to a second terminal of its corresponding capacitor via the corresponding rectifying element. Thereby, each winding portion is arranged to act as a current source for its corresponding capacitor. The circuit and method of the present invention are advantageous in that they allow serially connected capacitors to be charged and balanced in a simple way.

## Description

### Technical field

The present invention relates generally to charging of capacitors. More particularly, this invention relates to a circuit and a method for charging at least two serially connected capacitors.

### Background

Electrical Double-Layer Capacitors (EDLC) have proved to be very efficient when it comes to storing energy. However, currently EDLC capacitors cannot be designed for more than approximately 3 V. Thus, in order to obtain a higher total voltage, several EDLC capacitors have to be connected in series. When charging serially connected capacitors it is normally of interest to charge the capacitors such that they obtain equal voltage regardless if there is a difference in capacitance and parasitic resistance between the capacitors. Usually, capacitors having the same nominal capacitance values are chosen. However, the actual capacitance values may depart quite a lot from the nominal value due to manufacturing imperfections.

Several attempts have been made to solve this problem. For example, one approach has been to connect the serially connected capacitors to a secondary winding of a fly-back transformer. In an ideal situation, i.e. when the capacitances of the capacitors are equal and the parasitic resistances of the capacitors are equal, the charge is distributed between the capacitors such that the voltages across them become equal. However, in all real cases neither the capacitances nor the parasitic resistances are equal. As a consequence thereof, the voltages across the capacitors will either diverge from each other or converge very slowly towards each other upon charging.

One way of improving this approach has been to connect resistors with high resistance values in parallel with the capacitors. In this way, the balancing of the capacitors is improved. A further improvement is obtained by connecting an operational amplifier at the common node between the serially connected capacitors and the resistors. A drawback with this approach is that it results in power loss due to heat dissipation in the resistors and in the operational amplifier.

A different approach for charging capacitors is disclosed in US 2007/0127274. This document discloses a device for charging serially connected capacitors. The device comprises an individual transformer associated with each individual capacitor and a fly-back transformer from which energy is transferred. The energy is transferred, via the individual transformers, to the capacitors depending on the charge of the capacitors.

Even if there are approaches available for charging serially connected capacitors, there is still room for improvements.

### Summary of the invention

The approach disclosed in US 2007/0127274 comprises a high number of electrical components. Hence it may be regarded as complicated and therefore disadvantageous.

In view of the above, it is thus an object of the present invention to provide an improved circuit and a method for charging of at least two serially connected capacitors. In particular, it is an object to provide a circuit and a method for charging of at least two serially connected capacitors which is simple and does not require a high number of electrical components.

According to a first aspect of the invention, the above object is achieved by a circuit for charging at least two serially connected capacitors, comprising: at least two serially connected capacitors, each capacitor having an initial voltage; wherein each capacitor has a corresponding rectifying element through which a forward current is allowed to flow exclusively in a predetermined current direction; and wherein each capacitor has a corresponding winding portion, the winding portions corresponding to the at least two capacitors having the same number of turns and being wound on a common core of a transformer, wherein a first end of each winding portion is connected to a first terminal of its corresponding capacitor, and a second end of each winding portion is connected to a second terminal of its corresponding capacitor via the corresponding rectifying element, and wherein each winding portion thereby is arranged to act as current source for its corresponding capacitor and rectifying element, and whereby generation, via the transformer, of a voltage across the winding portions having a polarity corresponding to the predetermined current direction causes a current to flow at least through the rectifying element whose corresponding capacitor has the lowest initial voltage, such that at least this capacitor thereby is charged.

By initial voltage of a capacitor is meant the voltage across the capacitor prior to charging of the capacitor.

By rectifying element is meant an electrical component through which a current is only allowed to flow in one direction.

A winding portion is to be interpreted such that it may either be a portion of a winding comprising several portions or a portion of a winding comprising a single winding portion.

By the winding portions having the same number of turns is meant that the number of turns of the winding portions is substantially the same. For example, the number of turns of the winding portions may be substantially the same if the ratio between the number of turns of the winding portion having the largest number of turns and the number of turns of the winding portion having the lowest number of turns is less than or equal to 1.1. Preferably, this ratio is less than or equal to 1.05 and more preferably less than or equal to 1.01. Thus, a first winding portion having 100 turns and a second winding portion having 101 turns have substantially the same number of turns and falls within the scope of the invention.

By means of the present invention, a simple circuit comprising a low number of electrical components is provided which allows at least two serially connected capacitors to be charged. More specifically, by providing a winding portion for each capacitor and by connecting a first end of each winding portion to a first terminal of its corresponding capacitor, and a second end of each winding portion to a second terminal of its corresponding capacitor via the corresponding rectifying element, each winding portion is arranged to act as a current source for its corresponding capacitor. This enables each capacitor to be individually charged by its corresponding winding portion upon generation, via the transformer, of a voltage having an appropriate polarity across the winding portions. Further, the winding portions have the same number of turns and are wound on a common core. This has as a result that the voltage across the winding portions will be equal. In principle, neglecting any voltage drops in the rectifying elements, as a voltage builds up across the winding portions a current starts to flow through the rectifying element corresponding to the capacitor having the lowest initial voltage. This happens as soon as the voltage generated across the winding portions is equal to the lowest initial voltage. Thus, at least the capacitor having the lowest initial voltage will be charged.

The current of the winding portions may furthermore be distributed over all the serially connected capacitors such that the capacitor with lowest initial voltage is charged more than any of the remaining serially connected capacitors, until equal voltage is present over all the serially connected capacitors, thereby balancing the voltages across the serially connected capacitors. This is another consequence of the voltages across the winding portions being equal and that each winding portion is arranged to act as a current source for its corresponding capacitor.

The at least two serially connected capacitors may be electric double-layer capacitors, EDLC. This is advantageous in that EDLC-capacitors have a high energy density. Further, EDLC-capacitors may only be designed for approximately 3 V and hence such capacitors are often serially connected to obtain a higher total voltage.

The transformer may further comprise a primary winding. Further, a voltage source may be connected to the primary winding via switching means. In this way, the voltage source is arranged to repeatedly apply a voltage across the primary winding. By connecting the voltage source to the primary winding via a switching means, the voltage applied across the primary winding may selectively be turned on and off. Further, the energy stored in the core when the switch is turned on once and then turned off once may not be sufficient to charge the capacitors to a desired voltage. Hence, it may be advantageously to repeatedly apply a voltage to the primary winding by selectively turning the voltage on and off via the switching means.

The primary winding may comprise at least one of the secondary winding portions. In this case, the voltage source is hence connected to at least one of the winding portions via the switching means. Thereby, at least one of the winding portions may be seen as a combined primary and secondary winding of the transformer. This is advantageous in that it provides a simple solution requiring a low number of electrical components.

The rectifying elements may be one of a diode, a transistor, and a switch. An advantage of using a transistor, such as a FET transistor, instead of a diode is that FET transistors do not have any PN-junction and may have a very low resistive voltage drop.

In one embodiment, the winding portions form separate windings on the common core. Expressed differently, each winding portion is in this case a winding on its own. As will be described in more detail below, this is advantageous in that separate windings may be used when more than two serially connected capacitors are to be charged.

In one embodiment the circuit comprises at least one common winding formed by two winding portions, wherein each common winding comprises a center tap forming the two winding portions, and wherein the center tap of each common winding is electrically connected to a point in the circuit located between the two serially connected capacitors corresponding to the two winding portions of the common winding.

This is advantageous since it provides a simple way of implementing the circuit. Specifically, by the winding portions being part of a common winding, the transformer will have one connection terminal less per common winding compared to if the winding portions are separate windings.

Further, in case the rectifying elements are diodes, a first winding portion of a common winding may correspond to a first capacitor and a first diode, and a second winding portion of the same common winding may correspond to a second capacitor and a second diode. The cathode of the first diode may be connected to a positive terminal of the first capacitor, and the anode of the second diode may be connected to a negative terminal of the second capacitor.

The circuit may further comprise a voltage controller arranged to measure a sum of voltages across the at least two serially connected capacitors and to control a voltage of the at least two serially connected capacitors based on the measured sum of voltages. Alternatively, the voltage controller may be arranged to measure a voltage across one of the at least two serially connected capacitors and to control a voltage of the at least two serially connected capacitors based on the measured voltage. Yet alternatively the voltage controller may be arranged to measure a voltage across each of the at least two serially connected capacitors and to control a voltage of the capacitor having the lowest measured voltage. The inclusion of a voltage controller in the circuit is advantageous in that it enables improved control of the voltages of the at least two serially connected capacitors. A particular advantage of only controlling the capacitor having the lowest measured voltage is that this implicitly means that all capacitors are controlled. This is due to the fact that only the capacitor having the lowest initial voltage is charged if there is a large difference between the voltages across the capacitors.

The voltage controller may further be arranged to control the voltage across at least one of the serially connected capacitors by repeatedly applying a voltage across the primary winding of the transformer via the switching means.

According to a second aspect of the invention the object is solved by a method for charging at least two serially connected capacitors. The method comprises: providing at least two serially connected capacitors, each capacitor having an initial voltage; providing, for each capacitor, a corresponding rectifying element through which a forward current is allowed to flow exclusively in a predetermined current direction; providing, for each capacitor, a corresponding winding portion, the winding portions corresponding to the at least two capacitors having the same number of turns and being wound on a common core of a transformer, wherein a first end of each winding portion is connected to a first terminal of its corresponding capacitor, and a second end of each winding portion is connected to a second terminal of its corresponding capacitor via the corresponding rectifying element, and wherein each winding portion thereby is arranged as a current source for its corresponding capacitor and rectifying element; and generating, via the transformer, a voltage across the winding portions having a polarity corresponding to the predetermined current direction, whereby a current is caused to flow at least through the rectifying element whose corresponding capacitor has the lowest initial voltage, such that at least this capacitor thereby is charged.

The second aspect may generally have the same features and advantages as the first aspect. It is further noted that the invention relates to all possible combinations of features unless explicitly stated otherwise.

Generally, all terms used in the claims are to be interpreted according to their ordinary meaning in the technical field, unless explicitly defined otherwise herein. All references to "a/an/the [device, event, message, alarm, parameter, step etc.]" are to be interpreted openly as referring to at least one instance of said device, event, message, alarm, parameter, step etc., unless explicitly stated otherwise. The steps of any method disclosed herein do not have to be performed in the exact order disclosed, unless explicitly stated.

### Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Figs 1-4 are schematic diagrams of circuits according to embodiments of the present invention, and
Fig. 5 is a flow chart of a method according to embodiments of the present invention.

### Detailed description of embodiments

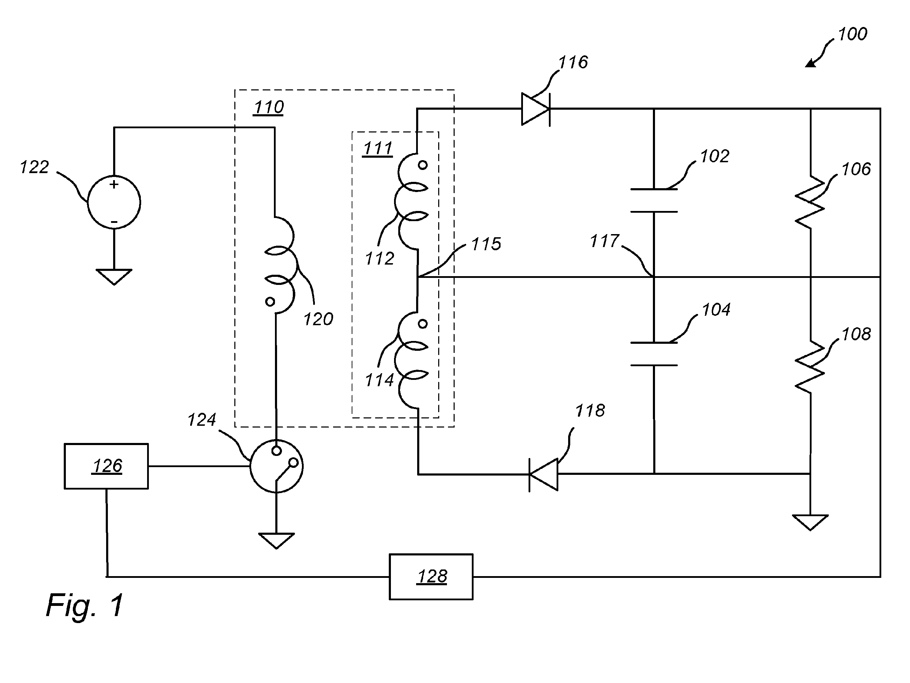

Fig. 1 illustrates a circuit 100 according to an embodiment of the present invention. The circuit 100 comprises two serially connected capacitors 102 and 104, two rectifying elements 116 and 118, and a transformer 110. The circuit 100 is arranged to charge the capacitors 102 and 104 using the transformer as a current source, such that the resulting voltages across the capacitors 102 and 104 become equal.

The two serially connected capacitors 102 and 104 have capacitances C1 and C2 which may be of different values. Typical values of C1 and C2 are in the order 10F. However, in general, capacitors having any capacitance value of C1 and C2 may be used. Further, the capacitors 102 and 104 each comprise a parasitic resistance, here illustrated by resistors 106 and 108 being connected in parallel to the capacitors 102 and 104, respectively. The resistance R1 of resistor 106 and the resistance R2 of resistor 108 may be of different values. Typical values of R1 and R2 are in the order 1MΩ. The capacitors 102 and 104 may further comprise a serial parasitic resistance (not shown) being of minor importance for the present invention.

For example, the two serially connected capacitors 102 and 104 may be electric double-layer capacitors (EDLC), sometimes referred to as super capacitors. Currently, such capacitors may typically not be designed for more than approximately 3 V. In order to achieve a higher voltage, several EDLCs may be connected in series. The inventor of the present invention has in connection to this identified a particular need for charging and balancing serially connected capacitors of this type. A benefit of EDLCs compared to traditional capacitor types is that they have a much higher energy storage capability. But the subject matter of the present invention may equally apply in the context of conventional electrolytic capacitors. Hence, the serially connected capacitors 102 and 104 may further be conventional electrolytic capacitors.

The transformer 110, which for example may be a fly-back transformer, comprises a core (not illustrated) and has a primary side and a secondary side. On the secondary side there are two winding portions 112 and 114 being part of a common secondary winding 111. The winding directions of the two winding portions 112 and 114 are the same and are in the circuit diagram indicated by a dot in a conventional manner. The winding portions 112 and 114 are wound around the core of the transformer 110. The winding portions 112 and 114 have essentially the same number of turns. Since the winding portions 112 and 114 are wound on the same core and have essentially the same number of turns, the voltage across the winding portions 112 and 114 will be essentially equal. There may however be a small difference in these voltages due to resistive voltage drops in the windings. If the current in the windings is small, the voltage drops will be very small and negligible.

Each of the winding portions 112 and 114 corresponds to one of the capacitors 102 and 104. In the illustrated circuit 100, the winding portion 112 corresponds to the capacitor 102 and the winding portion 114 corresponds to the capacitor 104. The winding portions 112 and 114 are further arranged to act as a current source for its corresponding capacitor. More precisely, the winding portion 112 is connected to the capacitor 102 via the rectifying element 116 and will act as a current source for this capacitor 102. Similarly, the winding portion 114 is connected to the capacitor 104 via the rectifying element 118 and will act as a current source for this capacitor 104.

In more detail, the secondary winding 111 comprises a center tap 115 which is located between the two winding portions 112 and 114. The center tap 115 is electrically connected to a point 117 in the circuit located between the two serially connected capacitors 102 and 104. In this way, a first end of the winding portion 112 is connected to the negative terminal of the capacitor 302 via the center tap. The second end of the winding portion 112 is connected to the capacitor 102 via the rectifying element 116. Similarly, a first end of the winding portion 114 is connected to the positive terminal of the capacitor 104 via the center tap. The second end of the winding portion 114 is connected to the capacitor 104 via the rectifying element 118.

Each of the two serially connected capacitors 102 and 104 corresponds to one of the rectifying elements 116 and 118. More precisely, in the illustrated circuit 100, the capacitor 102 corresponds to the rectifying element 116 and the capacitor 104 corresponds to the rectifying element 118.

The role of the rectifying elements 116 and 118 is to rectify a current direction of the winding portions 112 and 114 to a single current direction being the same for the winding portions 116 and 118. In other words, as a consequence of the rectifying elements 116 and 118, a forward working current may exclusively flow in one direction through the winding portions 112 and 114. In the illustrated circuit 100 this is achieved by arranging the rectifying elements 116 and 118 in a direction such that current only may flow in a clock-wise direction.

In principle, the rectifying elements 116 and 118 may be any type of electrical component through which a working current is allowed to flow exclusively in one direction. For example, the rectifying elements 116 and 118 may be diodes, transistors, such as FET transistors, or switches. In case the rectifying elements 116 and 118 are diodes, the cathode of the diode 116 is connected to a positive terminal of the capacitor 102, and the anode of the diode 118 is connected to the negative terminal of the capacitor 104.

The rectifying elements 116 and 118 may be associated with a voltage drop. In case the rectifying elements 116 and 118 are diodes, the voltage drop can be divided into two parts. One part is temperature dependent and associated with the PN-junction and is approximately 0.6 V for an ordinary diode and lower for a Schottky diode which is preferably used in this case. As a result of the first part of the voltage drop, a forward current is allowed to flow through the rectifying element exclusively in case the voltage applied thereupon is larger than the first voltage drop. The other part of the voltage drop is associated with a resistive voltage drop and is therefore dependent on the current through the diode. If FET transistors are used instead of diodes there is no PN-junction and hence no such associated voltage drop. Furthermore, FET-transistors may have a very low resistive voltage drop.

The transformer 110 further has a primary winding 120. The primary winding 120 is wound around the core of the transformer 110 and the winding direction of the winding is illustrated by a dot in the circuit diagram in a conventional manner. It is to be noted that the primary winding 120 and the winding portions 112 and 114 are wound in phase opposition, which is typical for a flyback transformer. The primary winding 120 is connected to a voltage source 122 via a switching means 124. The switching means 124 may be arranged to be turned on and off in a repetitive manner, such that a voltage is repeatedly applied across the primary winding. For example the switching means may be coupled to a pulse generator 126 arranged to generate pulses which are used to turn the switching means 124 on and off in a pulsating manner.

The circuit 100 may further comprise a voltage controller 128. The voltage controller 128 is arranged to control the voltage across the two serially connected capacitors 106 and 108. For example, the voltage controller 128 may be connected to the switching means 124 or pulse generator 126 and control the voltage across the capacitors 102 and 104 by turning the switching means 124 on and off, or adjusting parameters of the pulse generator 126. For example, the voltage controller 128 may control the voltage across the capacitors 102 and 104 using pulse width modulation. Pulse width modulation means that the relation between the time during which the switching means 124 is on and the time during which the switching means 124 are off is adjusted.

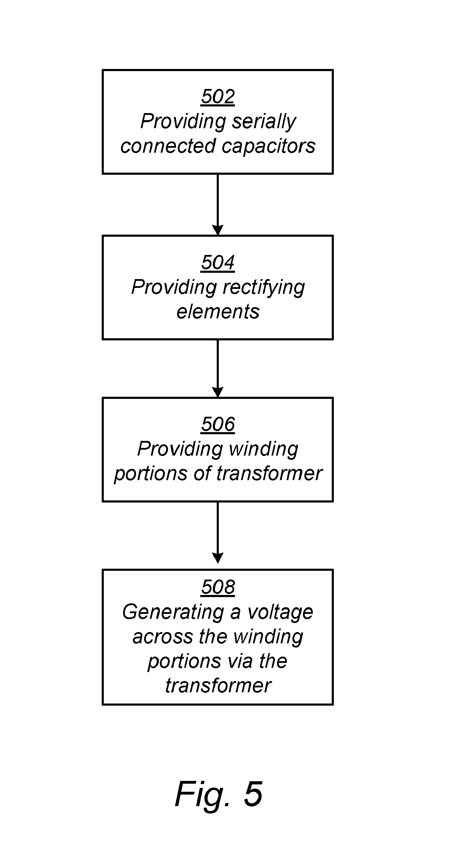

In order to describe the functionality of the circuit 100, a method for charging at least two serially connected capacitors will now be disclosed with reference to Fig. 5 and Fig. 1.

Prior to charging, there is an initial voltage across the capacitors 102 and 104. The initial voltage may be equal to 0 V. The initial voltage may differ between the capacitors 102 and 104. The aim of the method is to charge the capacitors 102 and 104 such that the resulting voltages across the capacitors 102 and 104 become equal. In other words, the purpose of the method is to charge the capacitors 102 and 104 and to balance the resulting (non-zero) voltage across them.

Steps 502, 504, 506, and 508 of the method comprise providing a circuit according to any embodiment of the invention.

More precisely, in step 502 at least two serially connected capacitors 102 and 104 are provided. In step 504, two rectifying elements 116 and 118 are provided. In step 506 a corresponding winding portion is provided for each capacitor.

In step 508 a voltage is generated across the winding portions 112 and 114 via the transformer 110. The voltage may be generated by means of the voltage source 122, the switching means 124 and the transformer 110.

In particular, step 508 of generating a voltage across the winding portions may comprise a first sub-step of applying a voltage across the primary winding 120. More specifically, by turning on the switch 124, an input voltage Vp generated by the voltage source 122 is applied to the primary winding 120 of the transformer 110. In the illustrated circuit 100, the input voltage Vₚ is applied to the primary winding 120 with plus to the non-dotted side of the primary winding 120. As a result, the current in the primary winding 120 is increasing due to the inductance of the primary winding 120. At the same time, there will be a voltage across the winding portions 112 and 114 at the secondary side of the transformer 110 with plus to the non-dotted side of the winding portions 112 and 114. The size of the voltage across the winding portions 112 and 114 depends on the number of turns on the winding portions 112 and 114 relatively the number of turns of the primary winding 120. However, no current will flow through the winding portions 112 and 114 on the secondary side of the transformer 110 at this time since the rectifying elements 116 and 118 are reverse biased, thus not conducting any current.

Then, in a second sub-step a voltage is generated, via the transformer, across the winding portions 112 and 114 having a reversed polarity, namely a polarity corresponding to the current direction of the rectifying elements 116 and 118. In more detail, by turning off the switch 124, the polarity of the voltage across the primary winding 120 is reversed. This is due to the current inertia behavior of an inductor which tries to preserve the current in it. As a result of the polarity change in the primary winding 120, the polarity of the voltages across the winding portions 112 and 114 is also reversed. At this time, there cannot be any current flowing in the primary winding 120 since the switch 124 is turned off. However, as the winding portions 112 and 114 are wound on the same core as the primary winding 120, a current may flow in the winding portions 112 and/or 114. In particular, a current may flow through the rectifying elements 116 and/or 118 since the polarity of the generated voltage across the winding portions 112 and 114 now corresponds to the predetermined current direction of the rectifying elements 116 and 118.

The current may be distributed between the two winding portions 112 and 114. This is due to the electrical connection formed between the center tap 115 and the circuit point 117 located between the two capacitors 102 and 104. In principle, only the winding portion acting as a current source for the capacitor having the lowest initial voltage will carry any current. More precisely, as the switch 124 is turned off, a voltage starts to build up across the winding portions 112 and 114. Since the winding portions 112 and 114 are wound on the same core and have the same number of turns, the voltage across the winding portions 112 and 114 will be equal (as further disclosed above). In principle, as the voltage across the winding portions 112 and 114 become equal to the initial voltage of the capacitor having the lowest initial voltage, the rectifying element corresponding to the capacitor having the lowest initial voltage will start to lead a forward current. Thereby, a current starts to flow through the winding portion corresponding to the capacitor having the lowest initial voltage. As a result, the capacitor having lowest initial voltage is charged.

In practice, however, the rectifying elements 116 and 118 may have an associated non-resistive voltage drop due to for example a PN-junction. For example, this is the case if the rectifying element 116 and 118 are diodes. As a consequence, the rectifying element corresponding to the capacitor having the lowest initial voltage will lead a current when the generated voltage across the winding portions is equal to the sum of the lowest initial voltage and the associated voltage drop.

If the initial voltages of the capacitors 102 and 104 are very different (say, in the order 0.2 V), only the winding portion supplying the capacitor with the lowest voltage will carry any current. However, if there is only a small difference (say, in the order 0.02 V) between the initial voltages, a current may flow in both winding portions 112 and 114. Suppose for example that the capacitor 112 has the lowest initial voltage and that the corresponding rectifying element 116 has an associated resistive voltage drop as explained above. As a current starts to flow through the rectifying element 116, there will hence be a resistive voltage drop across the rectifying element 116. This causes the voltage across the winding portions 112 and 114 to increase by a corresponding amount. The increased voltage 116 across the winding portions 112 and 114 may in turn cause the rectifying element 118 corresponding to the capacitor 104 to carry a current. Thereby, both winding portions 112 and 114 will carry a current and both capacitors 102 and 104 will be charged.

When the switch 124 is turned on and then off, a certain amount of energy is stored in the circuit 100. The amount of energy stored in the circuit 100 during one such on/off-cycle of the switch 124 may not be enough to charge the capacitors 102 and 104 to a desired voltage level. In order to overcome this problem, the method may further comprise repeating step 508. In this way, a voltage may repeatedly be applied across the primary winding 120 by turning the switch 124 on and off in cycles. For example, the switch 124 may be turned on and off in a pulsating manner by means of the pulse generator 126.

Further, the method may comprise measuring, by the voltage controller 128, a voltage across one or each of the serially connected capacitors 102 and 104. For example the total voltage across both capacitors 102 and 104 may be measured, meaning that the sum of the voltages across the capacitors 102 and 104 is measured.

Still further, the method may comprise controlling the voltage across the at least two serially connected capacitors 102 and 104 based on the measured voltage. Alternatively, in case the voltage across each capacitor 102 and 104 is measured, the method may comprise controlling the voltage across the capacitor 102 or 104 having the lowest measured voltage. In this way, since the circuit 100 charges the capacitor having the lowest initial voltage, the voltages across all of the capacitors 102 and 104 are controlled. For example, the voltage controller 128 may control the voltages across the capacitors 102 and 104 by means of feedback of the measured voltages. The measured voltages may for example be compared to a reference voltage. The voltage controller 128 may send a control signal to the switch 124 or to the pulse generator 126 to continue to turn on/off until a desired voltage is measured across the capacitor 102 and/or 104. For example, the control signal provided by the voltage controller 128 to the pulse generator 126 may control the pulse width modulation which in turn controls the turning on or off of the switching means 124. The control signal may be based on the comparison of the measured voltages to the reference voltage. Further, the control signal may be based on the derivative of the measured voltages. Also, the control signal may be based on an integral of the measured voltages. In other words, the voltage controller 128 may use proportional control, integral control, derivate control and combinations thereof.

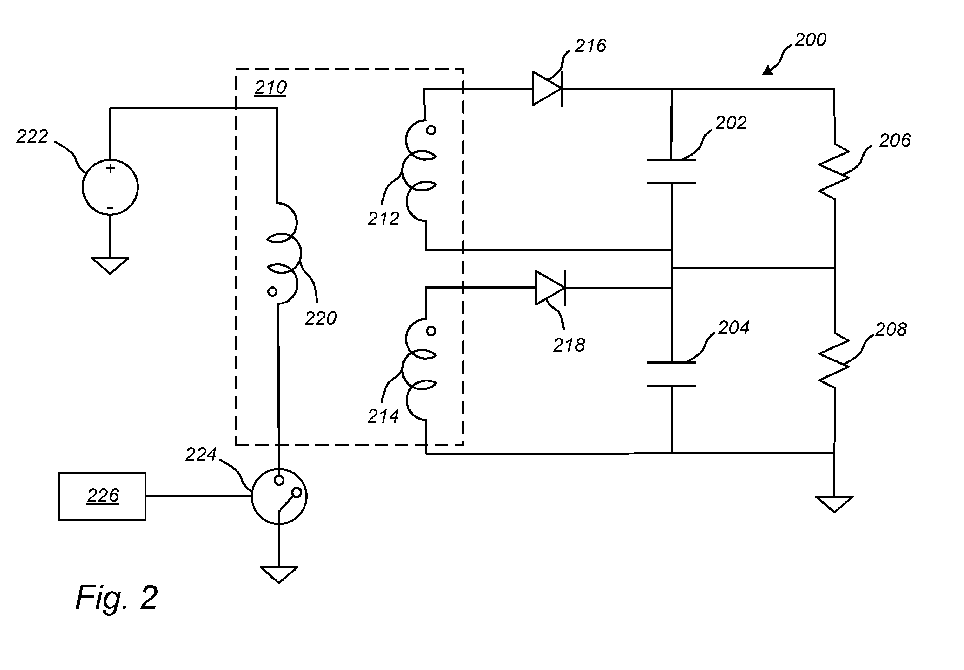

Fig. 2 illustrates a circuit 200 according to an alternative embodiment of the present invention. The circuit 200 comprises two serially connected capacitors 202 and 204 having parasitic resistances 206 and 208, two winding portions 212 and 214 and two rectifying elements 216 and 218 corresponding to the capacitors 202 and 204, respectively. In the illustrated circuit 200, the upper end of the winding portion 212 is coupled to the positive terminal of the capacitor 202 via the rectifying element 216, and the lower end of the winding portion 212 is directly coupled to the negative terminal of the capacitor 202. Similarly, the upper end of the winding portion 214 is coupled to the positive terminal of the capacitor 204 via the rectifying element 218, and the lower end of the winding portion 214 is directly coupled to the negative terminal of the capacitor 204. However, for the functioning of the invention, it does not matter whether the rectifying elements 216 and 218 are coupled to the positive or the negative terminal of the corresponding capacitors 202 and 204, respectively, as long as they are correctly directed. In the illustrated circuit 200, correctly directed corresponds to the rectifying elements 216 and 218 allowing a current in a clock-wise direction. The winding portions 212 and 214 are wound on a common core on a secondary side of a transformer 210. Preferably, in case the circuit 200 is to be used for charging and balancing the capacitors 202 and 204 to a common voltage, the winding portions 212 and 214 have the same number of turns. The winding portions 212 and 214 form separate windings on the common core. More specifically, the winding portion 212 forms a first secondary winding and the winding portion 214 forms a second secondary winding of the transformer.

This is the main difference between this embodiment and the embodiment described with respect to Fig. 1.

The transformer 210 further comprises a primary winding 220. The primary winding 220 is coupled to a voltage source 222 and a switching means 224 such that a voltage may be applied across the primary winding 220 in cycles. Further, the circuit comprises a pulse means 226 for turning the switching means 224 on and off in a repetitive manner.

Although not indicated in Fig. 2, the circuit 200 may comprise a voltage controller as described with reference to Fig. 1.

The components of the circuit 200 correspond to those disclosed with respect to Fig. 1. Further, the functionality of the components of the circuit 200 as well as the functionality of the circuit 200 as a whole is the same as for the components and circuit disclosed with respect to Fig. 1. Thus when the switching means 224 are turned on, a voltage is applied over the primary winding 220 and a current starts to flow in the primary winding. However, no current will flow through the winding portions 212 and 214 on the secondary side of the transformer 210 since the diodes 216 and 218 are reverse biased. When the switching means 224 is turned off, the polarity of the voltages across the primary winding 220 as well as the voltages across the winding portions 212 and 214 are reversed. The voltages across the winding portions 212 and 214 will be equal since they are wound on the same core and have the same number of turns. A current will start to flow through the rectifying element 216 or 218 corresponding to the capacitor 202 or 204 having the lowest voltage. This happens as soon as the voltage across the winding portions 212 and 214 becomes larger than the sum of the initial voltage across the capacitor 202 or 204 having the lowest initial voltage and a possible voltage drop across the corresponding rectifying element 216 or 218. Thereby, at least the capacitor having the lowest initial voltage is charged.

The circuit 200 may easily be generalized to comprise more than two serially connected capacitors.

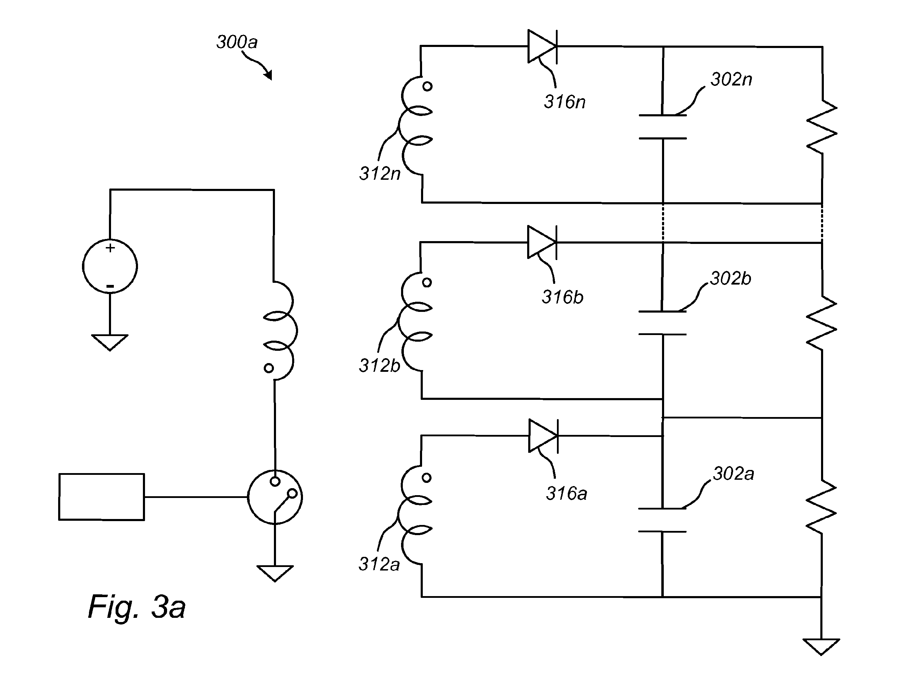

Fig. 3a illustrates a circuit 300a comprising n serially connected capacitors 302a, 302b, ..., and 302n. Each of the n serially connected capacitors 302a-n has a corresponding winding portion 312a-n, respectively. The winding portions 312a-n are wound on a common core. The winding portions 312a-n have the same number of turns. Further, the winding portions 312a-n form separate windings on the core. In the same manner as described with respect to Fig. 2, a first end of the winding portions 312a-n are directly coupled to a first terminal of its corresponding capacitor 302a-n. Similarly, a second end of each of the winding portions 312a-n is coupled to a second terminal of the corresponding capacitor via a rectifying element 316a-n.

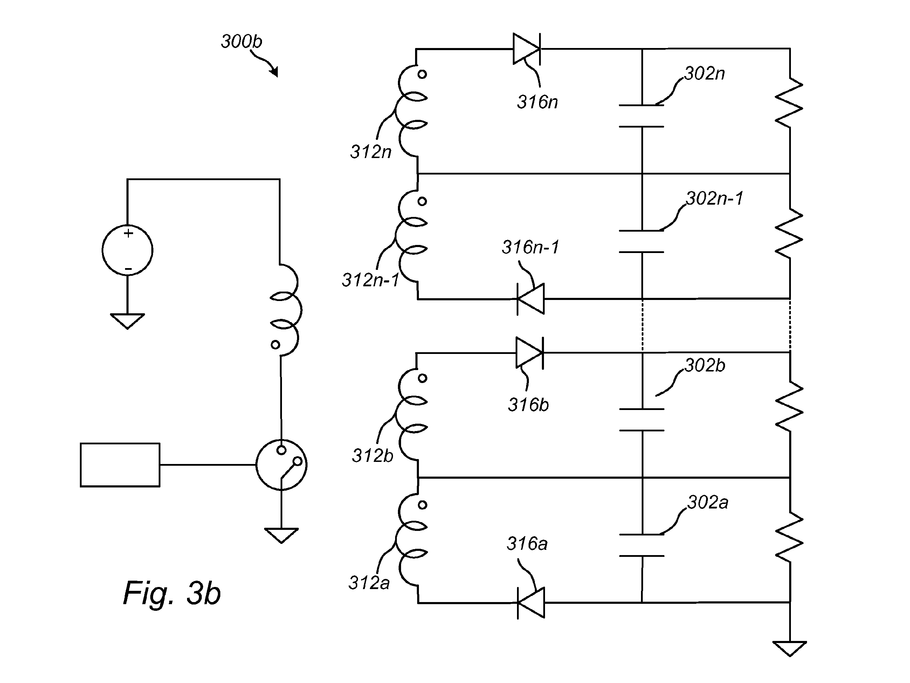

Fig. 3b illustrates a circuit 300b which is a generalization of circuit 100 of Fig. 1 in the case of more than two capacitors. The circuit 300b comprises an even number n of serially connected capacitors 302a, 302b, ..., 302n. Each of the n serially connected capacitors 302a-n has a corresponding winding portion 312a-n. The winding portions 312a-n are wound on a common core of a transformer. The winding portions 312a-n have the same number of turns. The winding portions 312a-n are associated in pairs. More specifically, the adjacent winding portions 312a and 312b are associated and form part of a common secondary winding. Similarly, the winding portions 312n-1 and 312n are part of another common secondary winding. In total the circuit 300b comprises n/2 secondary windings. Each of the common secondary windings comprises a center tap which is connected to a point between the corresponding capacitors of the winding portions of the common winding. Thus, each common secondary winding will charge two capacitors in the manner described with reference to Fig. 1.

It is to be understood that the embodiments of Figs 3a-b may be combined such that some of the winding portions 312a-n are separate windings as in Fig. 3a and some of the winding portions are combined in pairs as in Fig. 3b. This is particularly advantageous if there are an odd number of serially connected capacitors.

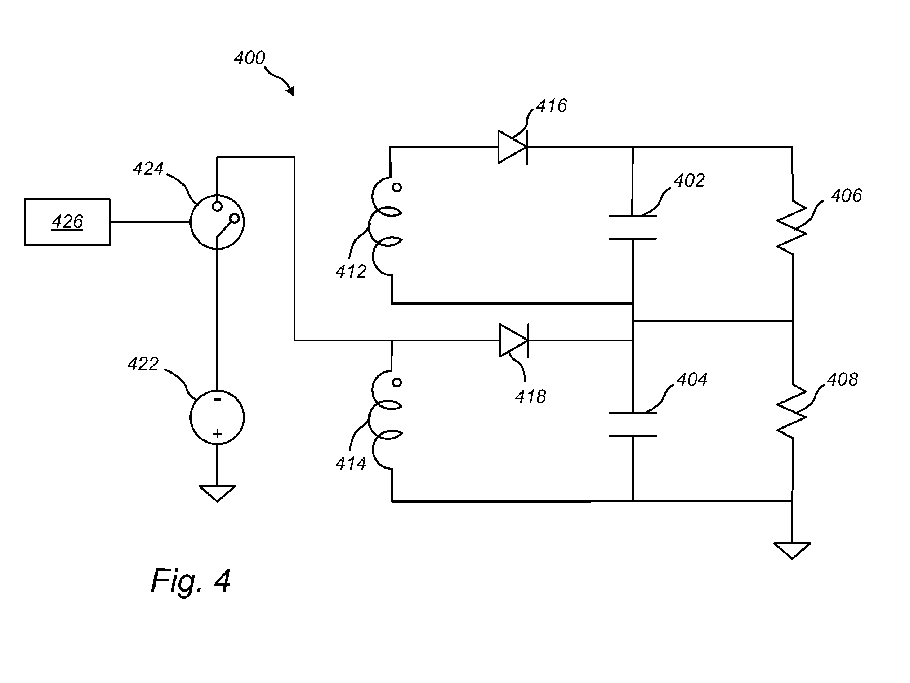

Fig. 4 illustrates a circuit 400 according to yet another embodiment of the present invention. The circuit 400 comprises two serially connected capacitors 402 and 404, two corresponding winding portions 412 and 414, and two corresponding rectifying elements 416 and 418. The components illustrated in Fig. 4 have generally the same functionality as the corresponding components in Figs 1-3. The winding portions 412 and 414 form two separate windings and are wound on a common core. The core is part of a transformer having a combined primary and secondary winding. More precisely, one of the winding portions, such as winding portion 414, is coupled to a voltage source 422 via a switching means 424. The switching means 424 may in turn be coupled to a pulse means 426. In this way, the winding portion 414 serves as a primary winding of the transformer. As further disclosed below, the winding portions 412 and 414 serve as secondary windings of the transformer. In other words, the winding portion 412 is a combined primary and secondary winding of the transformer.

Similarly to the embodiment disclosed with respect to Fig. 2, a first end of each winding portion is directly coupled to a first terminal of its corresponding capacitor, and the second end of each winding portion is coupled to a second terminal of the corresponding capacitor via a rectifying element 416 or 418. In this way, the winding portions 412 and 414 are arranged to act as a current source for its corresponding capacitor 402 and 404, respectively. Thereby, the capacitors 402 and 404 may be individually charged by their corresponding winding portions 412 and 414, respectively.

The rectifying elements 416 and 418 are associated with a predetermined current direction, such that a current only may flow through the rectifying element in the predetermined current direction. The predetermined current direction is the same for all rectifying elements 416 and 418. In the illustrated circuit, the rectifying elements 416 and 418 are associated with a clockwise current direction.

As the switch 424 is turned on, a voltage is applied across the winding portions 412 and 414 with minus to the dotted side and plus to the non-dotted side. As a result, a current will flow through the windings and magnetic energy is stored in the transformer. If the winding portions have the same number of turns, the voltage across both winding portions 412 and 414 will be equal since they are wound on a common core. However, no current flows through the rectifying elements 416 and 418 to the capacitors 402 and 404 as long as the switch is turned on since the rectifying elements 416 and 418 are reverse biased.

However, as the switch 424 is turned off, the polarity of the voltage across the winding portions 412 and 414 is reversed. More precisely, a voltage is generated across the winding portions 412 and 414. The polarity of the generated voltage across the winding portions 412 and 414 at this stage corresponds to the predetermined current direction of the rectifying elements 416 and 418. As explained with reference to Fig. 1, a current will as a result start to flow at least through the winding portion and rectifying element corresponding to the capacitor having the lowest initial voltage.

Although not indicated in Fig. 4, the circuit 400 may comprise a voltage controller as described with reference to Fig. 1.

It is to be understood that the embodiment of Fig. 4 may be combined with the embodiment of Fig. 2 in case more than two capacitors are to be charged.

In the embodiments described above with the reference to Figs 1-4, the winding portions have the same, or substantially the same, number of turns. An alternative embodiment where the winding portions have different number of turns will now be described with reference to Fig. 1. However, the skilled person realizes that the same modifications are equally possible for the embodiments described with reference to Figs 2-4.

In an alternative embodiment, the winding portions 112 and 114 have different number of turns. More precisely, the winding portion 112 comprises L2 turns and the winding portion 114 comprises L3 turns. Further, the primary winding 120 comprises L1 number of turns.

When a voltage is generated across the winding portions112 and 114 via the primary winding 120, the voltage across the winding portions 112 and 114 becomes proportional to number of turns L2 and L3, respectively. In particular, the voltage across each of the winding portions 112 and 114 becomes proportional to the ratio L2/L1 and L3/L1, respectively.

A result of the voltages across the winding portions 112 and 114 being different is that the corresponding capacitors 102 and 104 will not be charged and balanced to the same voltage. Instead, the capacitors 102 and 104 will be charged and balanced in proportion to the number of turns of their corresponding winding portion 112 or 114.

As previously described, a voltage having a polarity corresponding to the predetermined current direction of the rectifying elements 316 and 318 may be generated across the winding portions 112 and 114 by first turning the switching means 124 on and then off. The generated voltage causes a current to flow through at least one of the rectifying elements 116 and 118. However, in this case the rectifying element 116 or 118 that first starts to conduct a current does not necessarily correspond to the capacitor 102 and 104 having the lowest initial voltage. Thus, in this case the capacitor 102 or 104 being charged first is not the capacitor 102 or 104 that has the lowest initial voltage but the capacitor 102 or 104 which needs to be charged the most. The capacitor 102 and 104 which needs to be charged the most depends on the initial voltage, the number of turns of the corresponding winding portion, and the non-resistive voltage drop of the corresponding rectifying element.

In order to see which capacitor 102 and 104 that (at least) will be charged, the relevant quantity to study is the ratio between the initial voltage of the capacitor 102 or 104 and the number of turns of its corresponding winding portion 112 or 114. More specifically, the capacitor and corresponding rectifying element having the lowest value of the ratio of the sum of the initial voltage of the capacitor and the non-resistive voltage drop of the rectifying element to the number of turns of the corresponding winding portions will at least be charged.

It will be appreciated that a person skilled in the art can modify the above-described embodiments in many ways and still use the advantages of the invention as shown in the embodiments above. For example, different types and embodiments of transformers may be used than disclosed herein. For example, a Buck-transformer with an inductor on its primary side may be used. Thus, the invention should not be limited to the shown embodiments but should only be defined by the appended claims.

## Claims

1. Circuit for charging at least two serially connected capacitors, comprising:
at least two serially connected capacitors, each capacitor having an initial voltage;
wherein each capacitor has a corresponding rectifying element through which a forward current is allowed to flow exclusively in a predetermined current direction; and
wherein each capacitor has a corresponding winding portion, the winding portions corresponding to the at least two capacitors having the same number of turns and being wound on a common core of a transformer, wherein a first end of each winding portion is connected to a first terminal of its corresponding capacitor, and a second end of each winding portion is connected to a second terminal of its corresponding capacitor via the corresponding rectifying element, and wherein each winding portion thereby is arranged to act as a current source for its corresponding capacitor and rectifying element,
whereby generation, via the transformer, of a voltage across the winding portions having a polarity corresponding to the predetermined current direction, causes a current to flow at least through the rectifying element whose corresponding capacitor has the lowest initial voltage, such that at least this capacitor thereby is charged.

2. Circuit according to claim 1, whereby the current of the winding portions furthermore is distributed over all the serially connected capacitors such that the capacitor with lowest initial voltage is charged more than any of the remaining serially connected capacitors, until equal voltage is present over all the serially connected capacitors, thereby balancing the voltages across the serially connected capacitors.

3. Circuit according to claim 1, wherein the at least two serially connected capacitors are electric double-layer capacitors, EDLC.

4. Circuit according to claim 1, wherein the transformer further comprises a primary winding, and wherein a voltage source is connected to the primary winding via switching means which thereby is arranged to repeatedly apply a voltage across the primary winding.

5. Circuit according to claim 1, wherein the primary winding comprises at least one of the winding portions.

6. Circuit according to claim 1, wherein each of the rectifying elements is one of a diode, a transistor, and a switch.

7. Circuit according to claim 1, wherein the winding portions form separate windings on the common core.

8. Circuit according to claim 1, comprising at least one common winding formed by two winding portions, wherein each common winding comprises a center tap forming the two winding portions, and wherein the center tap of each common winding is electrically connected to a point in the circuit located between the two serially connected capacitors corresponding to the two winding portions of the common winding.

9. Circuit according to claim 8, wherein the rectifying elements are diodes, wherein a first winding portion of a common winding corresponds to a first capacitor and a first diode, wherein a second winding portion of the same common winding corresponds to a second capacitor and a second diode, and wherein a cathode of the first diode is connected to a positive terminal of the first capacitor, and wherein an anode of the second diode is connected to a negative terminal of the second capacitor.

10. Circuit according to claim 1, further comprising
a voltage controller arranged to measure a sum of voltages across the at least two serially connected capacitors and to control a voltage of the at least two serially connected capacitors based on the measured sum of voltages.

11. Circuit according to claim 1, further comprising
a voltage controller arranged to measure a voltage across one of the at least two serially connected capacitors and to control a voltage of the at least two serially connected capacitors based on the measured voltage.

12. Circuit according to claim 1, further comprising
a voltage controller arranged to measure a voltage across each of the at least two serially connected capacitors and to control a voltage of the capacitor having the lowest measured voltage.

13. Circuit according to any one of claims 10-12 when dependent on claim 4, wherein said voltage controller further is arranged to control the voltage across at least one of the serially connected capacitors by repeatedly applying a voltage across the primary winding of the transformer via the switching means.

14. Method for charging at least two serially connected capacitors, comprising
providing at least two serially connected capacitors, each capacitor having an initial voltage;
providing, for each capacitor, a corresponding rectifying element through which a forward current is allowed to flow exclusively in a predetermined current direction;
providing, for each capacitor, a corresponding winding portion, the winding portions corresponding to the at least two capacitors having the same number of turns and being wound on a common core of a transformer, wherein a first end of each winding portion is connected to a first terminal of its corresponding capacitor, and a second end of each winding portion is connected to a second terminal of its corresponding capacitor via the corresponding rectifying element, wherein each winding portion thereby is arranged as a current source for its corresponding capacitor and rectifying element; and
generating, via the transformer, of a voltage across the winding portions having a polarity corresponding to the predetermined current direction, whereby a current is caused to flow at least through the rectifying element whose corresponding capacitor has the lowest initial voltage, such that at least this capacitor thereby is charged.
